(19) Europäisches Patentamt
European Patent Office
Office européen des brevets

(11) EP 0 748 812 A1

(12) EUROPÄISCHE PATENTANMELDUNG

(43) Veröffentlichungstag: **18.12.1996 Patentblatt 1996/51**

(51) Int. Cl.[6]: **C07F 9/6571**

(21) Anmeldenummer: **96108973.7**

(22) Anmeldetag: **05.06.1996**

(84) Benannte Vertragsstaaten: **CH DE FR GB IT LI NL**

(30) Priorität: **12.06.1995 DE 19521339**

(71) Anmelder: **HOECHST AKTIENGESELLSCHAFT 65929 Frankfurt am Main (DE)**

(72) Erfinder:
- **Regnat, Dieter, Dr. 65817 Eppstein (DE)**
- **Kleiner, Hans-Jerg, Dr. 61476 Kronberg (DE)**

# (54) Neue Oxaphosphorine und Verfahren zu ihrer Herstellung

(57) Die vorliegende Erfindung betrifft Oxaphosphorine der Formel

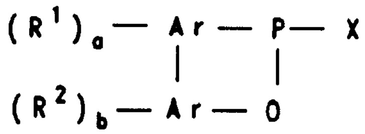

(I)

worin Ar-Ar für 1-Phenylnaphthyl oder 1,1'-Binaphthyl steht, $R^1$ und $R^2$ gleich oder verschieden sind und für F, Cl, Alkyl oder Alkoxy mit jeweils 1 bis 8 Kohlenstoffatomen oder substituiertes oder unsubstituiertes Aryl stehen, a und b gleich oder verschieden sind und für eine ganze Zahl von 0 bis 4 stehen oder Ar-Ar für Biphenyl steht, $R^1$ und $R^2$ gleich oder verschieden sind und für substituiertes oder unsubstituiertes Aryl stehen, a und b die vorstehende Bedeutung haben, jedoch $a + b \geqq 1$ ist, X jeweils für Cl oder Br steht und die Ar-P und die Ar-O Bindungen jeweils in ortho-Stellung zur Ar-Ar-Bindung angeordnet sind.
Die Erfindung betrifft ferner ein Verfahren zur Herstellung dieser Oxaphosphorine.

EP 0 748 812 A1

**Beschreibung**

Oxaphosphorine sind als 6-Chlor(6H)-dibenz-[c,e][1,2]-oxaphosphorine, deren Herstellung in der DE-OS 2 034 887 und EP-A-0 582 957 näher beschrieben ist, bekannt.

6-Chlor(6H)-dibenz-[c,e][1 ,2]-oxaphosphorin ist ein technisch bedeutendes Zwischenprodukt zur Herstellung von Flammschutzmitteln (DE-PS 26 46 218; DE-PS 27 30 371), Zusatzstoffen bei Polymerisationsprozessen (EP-A-0 454 462), Photoinitiatoren, Stabilisatoren für Polymere und photographisches Material. Diese Fülle der Möglichkeiten, das aufgrund seiner Reaktionsfähigkeit interessante Oxaphosphorinsystem technisch zu nutzen, wird allerdings dadurch eingeschränkt, daß Oxaphosphorine ausschließlich in Form der Dibenzooxaphosphorine zur Verfügung stehen.

In Hinblick auf die Möglichkeiten, die das Oxaphosphorinsystem für eine Vielzahl chemischer Synthesen eröffnet, stellt es eine lohnende Aufgabe dar, neue Verbindungen aus dieser Stoffgruppe bereitzustellen. Dadurch wird nicht nur das Spektrum ihrer Anwendungsmöglichkeiten vergrößert, sondern es lassen sich auch die stofflichen Eigenschaften und strukturellen Merkmale der Oxaphosphorine varrieren. Es ist nämlich anzunehmen, daß die chemische Eigenart und der strukturelle Aufbau der neuen Oxaphosphorine zur Herstellung weiterer, gegebenenfalls Phosphor enthaltender, organischer Verbindungen, in vorteilhafter Weise genutzt werden kann, wobei die chemische Eigenart und der strukturelle Aufbau ganz oder teilweise auf die herzustellenden Verbindungen übertragen werden.

Gelöst wird diese Aufgabe durch Oxaphosphorine der Formel

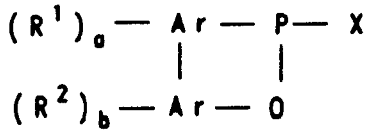

(I)

worin Ar-Ar für 1-Phenylnaphthyl oder 1,1'-Binaphthyl steht, $R^1$ und $R^2$ gleich oder verschieden sind und für F, Cl, Alkyl oder Alkoxy mit jeweils 1 bis 8 Kohlenstoffatomen oder substituiertes oder unsubstitituiertes Aryl stehen, 8 und b gleich oder verschieden sind und für eine ganze Zahl von 0 bis 4 stehen oder Ar-Ar für Biphenyl steht, $R^1$ und $R^2$ gleich oder verschieden sind und für substituiertes oder unsubstituiertes Aryl stehen, a und b die vorstehende Bedeutung haben, jedoch $a + b \geqq 1$ ist, X jeweils für Cl oder Br steht und die Ar-P und die Ar-O Bindungen jeweils in ortho-Stellung zur Ar-Ar-Bindung angeordnet sind.

Die erfindungsgemäßen Oxaphosphorine stellen interessante Verbindungen dar, da sie ein chirales P-Atom aufweisen und zudem in den Fällen, wo Ar-Ar für 1-Phenylnaphthyl oder 1,1'-Binaphthyl steht, einen chiralen organischen Rest besitzen. Die Oxaphosphorine, in denen Ar-Ar für Biphenyl steht, haben ebenfalls ein chirales P-Atom und der Biphenylrest, sofern er nicht symmetrisch substituiert ist, verleiht dem Oxaphosphorinmolekül eine zusätzliche Asymmetrie.

Sie sind insbesondere für die Herstellung weiterer Stoffe von Bedeutung, wobei die Chiralität des P-Atoms und gegebenenfalls die Chiralität oder die Asymmetrie des organischen Restes für die Synthese nutzbar gemacht wird. Wie aus der am gleichen Tag wie die vorliegende Patentanmeldung eingereichten deutschen Patentanmeldung (Aktenzeichen 19 521 340.8) hervorgeht, eignen sich die Oxaphosphorine in vorteilhafter Weise als Ausgangsstoffe zur Herstellung von Hydroxybiarylphosphanen.

Gegenstand der vorliegenden Erfindung sind insbesondere Oxaphosphorine der Formel (I), worin Ar-Ar für 1-Phenylnaphthyl oder 1,1'-Binaphthyl steht, $R^1$ und $R^2$ gleich oder verschieden sind und für F, Cl, Alkyl oder Alkoxy mit jeweils 1 bis 4 Kohlenstoffatomen oder Phenyl stehen, a und b gleich oder verschieden sind und für 0 oder 1 stehen oder Ar-Ar für Biphenyl steht, $R^1$ und $R^2$ gleich oder verschieden sind und für substituiertes oder unsubstituiertes Phenyl stehen und a+b gleich 1 oder 2 ist.

Von besonderer Bedeutung sind Oxaphosphorine der Formel (I), worin Ar-Ar 1-Phenylnaphthyl oder 1,1'-Binaphthyl ist und a und b für 0 stehen oder Ar-Ar Biphenyl, $R^1$ oder $R^2$ Phenyl und $a+b = 1$ ist. Diese Oxaphosphorine sind nämlich vergleichsweise gut zugänglich, da sie sich unter Verwendung von Ausgangsstoffen, die relativ leicht zu erhalten sind, ohne großen Aufwand herstellen lassen.

Die Erfindung betrifft in besonderem Maße die nachstehend aufgeführten Oxaphosphorine der Formeln (II), (III), (IV) und (V), nämlich

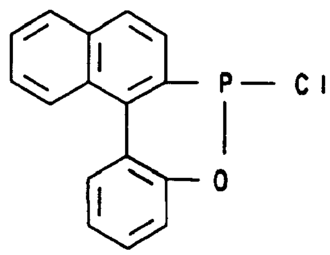

(II)

6-Chlor-6H-benzo[e]naphth[2,1-c][1,2]oxaphosphorin

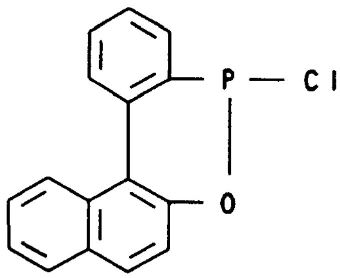

(III)

5-Chlor-5H-benzo[c]naphth[1,2-c][1,2]oxaphosphorin

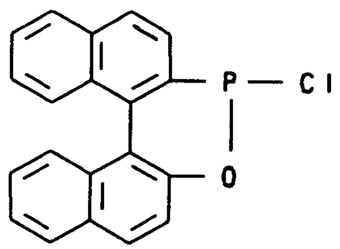

(IV)

3-Chlor-3H-dinaphtho[2,1-c:1',2'-e][1,2]oxaphosphorin und

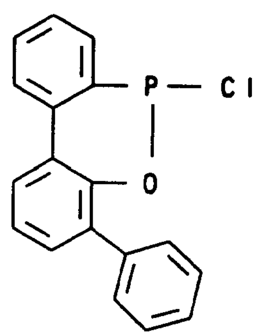

(V)

6-Chlor-6H-4-phenyl-dibenz[c,e][1,2]oxaphosphorin.

Ferner bestand die Aufgabe, einen Syntheseweg zu entwickeln, der die vorstehend genannten Oxaphosphorine auf einfache Art, ohne einen großen Aufwand betreiben zu müssen, zugänglich macht und der sich zudem auch technisch leicht realisieren läßt.

Diese Aufgabe wird durch ein Verfahren zur Herstellung der vorstehend genannten Oxaphosphorine gelöst. Es ist dadurch gekennzeichnet, daß man eine Verbindung der Formel

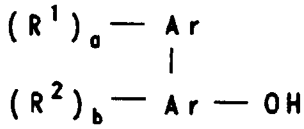

(VI)

worin $R^1$, $R^2$, a, b, Ar-Ar die vorstehend genannte Bedeutung haben und die OH-Gruppe in ortho-Stellung zur Ar-Ar-Bindung angeordnet ist, mit $PX_3$, worin X für Cl oder Br steht, und einer Lewis-Säure als Katalysator bei 140 bis 300°C unter Abspaltung von Halogenwasserstoff umsetzt.

An die Reihenfolge, in der das Phosphortrihalogenid $PX_3$ und die Lewis-Säure zugesetzt werden, sind im allgemeinen keine Bedingungen geknüpft. Man kann, folgend einer Verfahrensvariante, die Verbindung der Formel (VI) mit der Lewis-Säure versetzen, auf die vorgegebene Reaktionstemperatur erhitzen und anschließend $PX_3$ zusetzen.

Es ist jedoch nach einer anderen Verfahrensvariante möglich, die Verbindung der Formel (VI) mit $PX_3$ zu versetzen, auf die vorgegebene Reaktionstemperatur zu erhitzen und anschließend die Lewis-Säure zuzusetzen.

Man setzt die Verbindung der Formel (VI) und $PX_3$ in stöchiometrischem Verhältnis oder $PX_3$ im Überschuß ein. Üblicherweise setzt man die Verbindung der Formel (VI) und $PX_3$ im Molverhältnis 1:1 bis 1:1,5, insbesondere 1:1,1 bis 1:1,3 ein.

Überschüssig verwendetes $PX_3$ wird nach Abschluß der Umsetzung destillativ entfernt.

Man setzt als Katalysator die üblicherweise verwendeten Lewis-Säuren ein, beispielsweise Halogenide, insbesondere Chloride, der Elemente der Gruppe IIb und IIIa des periodischen Systems der Elemente.

Gut geeignet als Lewis-Säure ist Zinkchlorid.

Üblicherweise setzt man die Lewis-Säure in einer Menge von 0,05 bis 20, insbesondere 0,5 bis 10 Gew.-%, bezogen auf die Verbindung der Formel (VI) ein.

In einer Reihe von Fällen hat es sich als ausreichend erwiesen, die Umsetzung bei 160 bis 270, insbesondere 190 bis 250°C durchzuführen.

Man kann die Umsetzung bei Unterdruck, Normaldruck oder Überdruck ablaufen lassen, wobei darauf zu achten ist, daß der abgespaltene Halogenwasserstoff aus dem Reaktionsgemisch zu entfernen ist. Das anfallende Rohgemisch kann, falls gewünscht oder gefordert, durch übliche Verfahren, beispielsweise durch Destillation und/oder Kristallisation weiter gereinigt werden.

Die nachfolgenden Beispiele beschreiben die Erfindung näher, ohne sie darauf zu beschränken.

Experimenteller Teil

Beispiel 1

Herstellung von 6-Chlor-6H-benzo[e]naphth[2,1-c][1,2]oxaphosphorin

60 g (0,273 Mol) o-Naphthylphenol und 0,6 g Zinkchlorid werden unter Rühren auf 200°C erhitzt. Nun werden 46 g (0,335 Mol) Phosphortrichlorid in 5 Stunden eingetropft und anschließend 4 Stunden unter Rückfluß weiter gerührt. Das abgespaltene Abgas (HCl) wird abgeleitet. Dann wird abgekühlt und das überschüssige Phosphortrichlorid unter reduziertem Druck abdestilliert. Der Rückstand wird bei einer Badtemperatur von 200 bis 225°C und 0,2 mbar mit Hilfe eines Kugelrohrs destilliert. Man erhält 51 g 6-Chlor-6H-benzo[e]naphth[2,1-c][1,2]oxaphosphorin, die kristallin erstarren. Das entspricht einer Ausbeute von 66 % d.Th.

| | | | | |
|---|---|---|---|---|
| $C_{16}H_{10}ClOP$ (284,5) | ber.: | 67,48 % C | 3,52 % H | 10,9 % P |
| | gef.: | 67,5 % C | 3,45 % H | 10,8 % P |

Beispiel 2

Herstellung von 5-Chlor-5H-benzo[c]naphth[1,2-e][1,2]oxaphosphorin

10,9 g (0,0496 Mol) o-Phenylnaphthol-(2) und 0,3 g Zinkchlorid werden unter Stickstoffatmosphäre auf 200°C erhitzt und 8,3 g (0,06 Mol) Phosphortrichlorid unter Rühren langsam zugetropft. Wenn kein Abgas (HCl) mehr zu

beobachten ist, wird noch 30 Minuten am Rückfluß gekocht. Dann wird abgekühlt und das überschüssige Phosphortrichlorid unter reduziertem Druck abdestilliert. Der Rückstand wird bei einer Badtemperatur von 175 bis 200°C und 0,2 mbar mit Hilfe eines Kugelrohrs destilliert. Man erhält 12 g 5-Chlor-5H-benzo[c]naphth[1,2-e][1,2]oxaphosphorin, die kristallin erstarren (Schmelzpunkt: 123 bis 126°C).
Das entspricht einer Ausbeute von 85 % d.Th.

| | | | | |
|---|---|---|---|---|
| $C_{16}H_{10}ClOP$ (284,5) | ber.: | 67,48 % C | 3,52 % H | 10,9 % P |
| | gef.: | 67,4 % C | 3,5 % H | 10,4 % P |

Beispiel 3

Herstellung von 3-Chlor-3H-dinaphtho[2,1-c:1',2'-e][1,2]oxaphosphorin

20 g (0,146 Mol) Phosphortrichlorid werden unter Stickstoffatmosphäre auf 75 °C erhitzt und unter Rühren 31,5 g (0,117 Mol) o-Naphthylnaphthol-(2) portionsweise eingetragen. Dann wird langsam bis 150°C hochgeheizt unter Entwicklung von Chlorwasserstoff. Nun wird abgekühlt und 0,3 g Zinkchlorid zugegeben. Anschließend wird langsam erhitzt, bis eine Temperatur von 245°C erreicht ist. Bei dieser Temperatur verbleibt das Reaktionsgut, bis kein Abgasen von Chlorwasserstoff mehr zu erkennen ist. Nach dem Abkühlen wird das überschüssige Phosphortrichlorid abdestilliert. Der Rückstand enthält zu 40 % das Endprodukt ($^{31}$P-NMR ($CDCl_3$) $\delta$ = 131,94 ppm), das durch Säulenchromatographie in reiner Form gewonnen werden kann.

| | | | | |
|---|---|---|---|---|
| $C_{20}H_{12}ClOP$ (334,5) | ber.: | 71,74 % C | 3,59 % H | 9,27 % P |
| | gef.: | 71,5 % C | 3,5 % H | 9,1 % P |

Beispiel 4

Herstellung von 6-Chlor-(6H)-4-phenyl-dibenz-[c,e][1,2]-oxaphosphorin

25 g (0,102 Mol) 2,6-Diphenylphenol und 0,27 g Zinkchlorid werden unter Rühren und Stickstoffatmosphäre auf 200°C erhitzt. Nun werden 17,4 g (0,127 Mol) Phosphortrichlorid in einer Stunde eingetropft und nach insgesamt 90 Minuten erneut 2 g Phosphortrichlorid zugetropft und weiter am Rückfluß bei 200°C gehalten. Das abgespaltene Abgas (HCl) wird abgeleitet. Nach insgesamt zwei Stunden wird abgekühlt und das überschüssige Phosphortrichlorid unter reduziertem Druck abdestilliert. Der Rückstand wird anschliessend bei 0,1 mbar und einer Übergangstemperatur von 188°C destilliert. Man erhält
29 g, das entspricht einer Ausbeute von 92 % d.Th.

| | | | | |
|---|---|---|---|---|
| $C_{18}H_{12}ClOP$ (310,5) | ber.: | 69,57 % C | 3,87 % H | 9,98 % P |
| | gef.: | 69,3 % C | 3,91 % H | 9,8 % P |

**Patentansprüche**

**1.** Oxaphosphorine der Formel

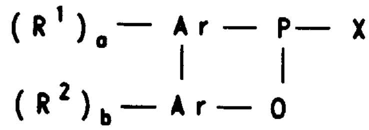

(I)

worin Ar-Ar für 1-Phenylnaphthyl oder 1,1'-Binaphthyl steht, $R^1$ und $R^2$ gleich oder verschieden sind und für F, Cl, Alkyl oder Alkoxy mit jeweils 1 bis 8 Kohlenstoffatomen oder substituiertes oder unsubstituiertes Aryl stehen, a und b gleich oder verschieden sind und für eine ganze Zahl von 0 bis 4 stehen oder Ar-Ar für Biphenyl steht, $R^1$ und $R^2$ gleich oder verschieden sind und für substituiertes oder unsubstituiertes Aryl stehen, a und b die vorstehende Bedeutung haben, jedoch $a + b \geqq 1$ ist, X jeweils für Cl oder Br steht und die Ar-P und die Ar-O Bindungen jeweils in ortho-Stellung zur Ar-Ar-Bindung angeordnet sind.

**2.** Oxaphosphorine nach Anspruch 1, dadurch gekennzeichnet, daß Ar-Ar für 1-Phenylnaphthyl oder 1,1'-Binaphthyl steht, $R^1$ und $R^2$ gleich oder verschieden sind und für F, Cl, Alkyl oder Alkoxy mit jeweils 1 bis 4 Kohlenstoffatomen oder Phenyl stehen, a und b gleich oder verschieden sind und für 0 oder 1 stehen oder Ar-Ar für Biphenyl steht, $R^1$ und $R^2$ gleich oder verschieden sind und für substituiertes oder unsubstituiertes Phenyl stehen und a+b gleich 1 oder 2 ist.

**3.** Oxaphosphorine nach Anspruch 1 oder 2, dadurch gekennzeichnet, daß Ar-Ar 1-Phenylnaphthyl oder 1,1'-Binaphthyl ist und a und b für 0 stehen oder Ar-Ar Biphenyl, $R^1$ oder $R^2$ Phenyl und $a+b = 1$ ist.

**4.** Oxaphosphorin nach einem oder mehreren der Ansprüche 1 bis 3, dadurch gekennzeichnet, daß es der Formel

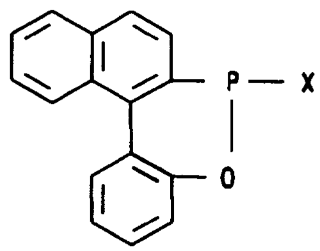

(II)

entspricht.

**5.** Oxaphosphorin nach einem oder mehreren der Ansprüche 1 bis 3, dadurch gekennzeichnet, daß es der Formel

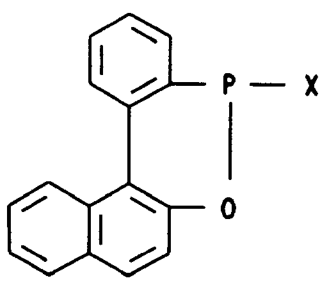

(III)

entspricht.

**6.** Oxaphosphorin nach einem oder mehreren der Ansprüche 1 bis 3, dadurch gekennzeichnet, daß es der Formel

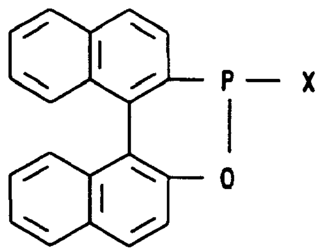

(IV)

entspricht.

7. Oxaphosphorin nach einem der Ansprüche 1 bis 3, dadurch gekennzeichnet, daß es der Formel

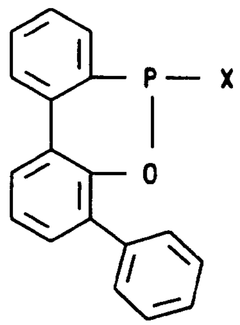

(V)

entspricht.

8. Verfahren zur Herstellung der Oxaphosphosphorine nach einem oder mehreren der Ansprüche 1 bis 7, dadurch gekennzeichnet, daß man eine Verbindung der Formel

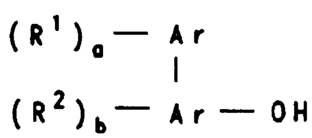

(VI)

worin $R^1$, $R^2$, a, b, Ar-Ar die vorstehend genannte Bedeutung haben und die OH-Gruppe in ortho-Stellung zur Ar-Ar Bindung angeordnet ist, mit $PX_3$, worin X für Cl oder Br steht, und einer Lewis-Säure als Katalysator bei 140 bis 300°C unter Abspaltung von Halogenwasserstoff umsetzt.

9. Verfahren nach Anspruch 8, dadurch gekennzeichnet, daß man die Verbindung der Formel (VI) mit der Lewis-Säure versetzt, auf die vorgegebene Reaktionstemperatur erhitzt und $PX_3$ zusetzt.

10. Verfahren nach Anspruch 8, dadurch gekennzeichnet, daß man die Verbindung der Formel (VI) mit $PX_3$ versetzt, auf die vorgegebene Reaktionstemperatur erhitzt und die Lewis-Säure zusetzt.

11. Verfahren nach einem oder mehreren der Ansprüche 8 bis 10, dadurch gekennzeichnet, daß man die Verbindung der Formel (VI) und $PX_3$ im Molverhältnis 1:1 bis 1:1,5, insbesondere 1:1,1 bis 1:1,3 einsetzt.

12. Verfahren nach einem oder mehreren der Ansprüche 8 bis 11, dadurch gekennzeichnet, daß man als Lewis-Säure Halogenide der Elemente der Gruppe IIb und IIIa des periodischen Systems der Elemente einsetzt.

13. Verfahren nach einem oder mehreren der Ansprüche 8 bis 12, dadurch gekennzeichnet, daß man Zinkchlorid als Lewis-Säure einsetzt.

**14.** Verfahren nach einem oder mehreren der Ansprüche 8 bis 13, dadurch gekennzeichnet, daß man die Lewis-Säure in einer Menge von 0,05 bis 20, insbesondere 0,5 bis 10 Gew.-%, bezogen auf die Verbindung der Formel (VI), einsetzt.

**15.** Verfahren nach einem oder mehreren der Ansprüche 8 bis 14, dadurch gekennzeichnet, daß man die Umsetzung bei 160 bis 270°C, insbesondere 190 bis 250°C durchführt.

Europäisches Patentamt

# EUROPÄISCHER RECHERCHENBERICHT

Nummer der Anmeldung
EP 96 10 8973

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | DE-A-20 34 887 (SANKO CHEMICAL CO. LTD.) * das ganze Dokument und insbesonders Seite 6, zweite Formel oben * --- | 1-3,8-15 | C07F9/6571 |
| D,A | EP-A-0 582 957 (HOECHST AG) * das ganze Dokument * ----- | 1-15 | |

RECHERCHIERTE SACHGEBIETE (Int.Cl.6)
C07F

Der vorliegende Recherchenbericht wurde für alle Patentansprüche erstellt

| Recherchenort | Abschlußdatum der Recherche | Prüfer |
|---|---|---|
| DEN HAAG | 26.September 1996 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)